# EUROPÄISCHE PATENTSCHRIFT

(11) **EP 2 638 625 B1**
(45) Veröffentlichungstag und Bekanntmachung des Hinweises auf die Patenterteilung: **01.04.2015**
(21) Anmeldenummer: 11788368.6
(22) Anmeldetag: 11.11.2011
(51) Int. Cl.: H02M 3/158

(54) **VORRICHTUNG ZUR IMPEDANZANPASSUNG**
APPARATUS FOR IMPEDANCE MATCHING
DISPOSITIF D'ADAPTATION D'IMPÉDANCE

(30) Priorität: 12.11.2010 DE 102010051088
(43) Veröffentlichungstag der Anmeldung: 18.09.2013
(73) Patentinhaber: Albert-Ludwigs-Universität Freiburg, 79098 Freiburg (DE)
(72) Erfinder: MAURATH, Dominic, 77815 Buehl-Ritterbach (DE); MANOLI, Yiannos, 79104 Freiburg (DE)
(74) Vertreter: Huwer, Andreas
(86) Internationale Anmeldenummer: PCT/EP2011/005685
(87) Internationale Veröffentlichungsnummer: WO 2012/062477

(56) Entgegenhaltungen:
- EP-A1- 1 608 053
- US-A1- 2005 218 964
- US-A1- 2006 176 029
- US-A1- 2009 015 229
- US-A1- 2009 085 535
- US-A1- 2009 167 267
- US-A1- 2010 026 208
- US-A1- 2010 026 263

## Beschreibung

Die Erfindung betrifft eine Vorrichtung nach dem Oberbegriff von Anspruch 1.

Eine derartige Vorrichtung ist aus US 2009/0067208 A1 bekannt, die als Generator eine Antenne aufweist, die in einem Elektromagnetischen Feld eine Wechselspannung abgibt. Die Antenne ist über ein Impedanzanpassungsmodul, ein Gleichrichtermodul zum Konvertieren der Wechselspannung in eine Gleichspannung und einen Gleichspannungs-Gleichspannungs-Konverter mit einem elektrischen Verbraucher verbunden. Der Gleichspannungs-Gleichspannungs-Konverter hat als Energiespeicher eine Induktivität, die mit einem ersten Anschluss mit einem Ausgang des Gleichrichtermoduls und mit ihrem zweiten Anschluss über eine Halbleiterdiode und ein dazu parallel geschaltetes Reglermodul mit dem Verbraucher verbunden ist. Über das Reglermodul kann der zweite Anschluss außerdem auf Massenpotential gelegt werden. Zum Erfassen eines Messsignals für die Ausgangsspannung des Gleichrichtermoduls ist eine Messeinrichtung vorhanden. In der Messeinrichtung wird die Ausgangsspannung des Gleichrichtermoduls mit einem oberen Schwellenwert und einem unteren Schwellenwert verglichen. Wenn die Ausgangsspannung größer ist als der obere Schwellenwert wird der Gleichspannungs-Gleichspannungs-Konverter aktiviert und wenn die Ausgangsspannung kleiner ist als der untere Schwellenwert ist, wird der Gleichspannungs-Gleichspannungs-Konverter deaktiviert. Da der Induktivität ein Impedanzanpassungsmodul vorgeschaltet ist, weist die Vorrichtung noch einen relativ komplizierten Aufbau auf

Aus US 2009/0015229 A1 ist ferner eine Vorrichtung bekannt, die Eingangsanschlüsse aufweist, die über einen bidirektionalen Konverter mit Ausgangsanschlüssen verbunden sind. Mit Hilfe des Konverters kann eine zwischen den Eingangsanschlüssen anliegende Eingangsspannung in eine davon abweichende, zwischen den Ausgangsanschlüssen anliegende Ausgangsspannung konvertiert werden. Der Konverter hat einen Energiespeicher und eine damit verbundene, steuerbare Schalteinrichtung, die in einen ersten sowie einen zweiten Schaltzustand bringbar ist. Im ersten Schaltzustand ist Energie aus dem Generator in den Energiespeicher einspeicherbar und im zweiten Schaltzustand ist die in dem Energiespeicher gespeicherte Energie an den Verbraucher abgebbar. Die Vorrichtung weist als verlustarmen Stromsensor einen Transistor auf, an dem der Spannungsabfall gemessen wird.

Aus US 2006/0176029 A1 ist eine Vorrichtung bekannt, die einen Konverter hat, mittels dem eine zwischen Eingangsanschlüssen anliegende Eingangsspannung in eine davon abweichende, zwischen den Ausgangsanschlüssen anliegende Ausgangsspannung konvertierbar ist. Der Konverter weist einen Energiespeicher, eine damit verbundene steuerbare Schalteinrichtung und eine Ansteuereinrichtung dafür auf Die Schalteinrichtung umfasst einen in einen ersten und einen zweiten Schaltzustand bringbaren Transistor. Im ersten Schaltzustand ist Energie aus dem Generator in den Energiespeicher einspeicherbar und im zweiten Schaltzustand wird die in dem Energiespeicher gespeicherte Energie an einen Verbraucher abgeben. Die Basis des Transistors wird mit Hilfe einer Pulsweitenmodulationseinrichtung angesteuert. Ein Eingangsanschluss der Pulsweitenmodulationseinrichtung ist mit dem Ausgang eines Komparators verbunden. An einem ersten Eingang des Komparators liegt eine an den Ausgangsanschlüssen über einen Spannungsteiler abgegriffene Rückkopplungsspannung und an einem zweiten Eingang des Komparators eine Referenzspannung an.

Aus EP 1 608 053 A1 ist eine Vorrichtung mit einem Konverter bekannt, mittels dem eine zwischen Eingangsanschlüssen anliegende Eingangsspannung in eine davon abweichende, zwischen Ausgangsanschlüssen anliegende Ausgangsspannung konvertierbar ist. Der Konverter weist als Energiespeicher eine Induktivität auf, die mit der Source-Drain-Strecke eines Feldeffekttransistors verbunden ist. In einem ersten Schaltzustand des Feldeffekttransistors ist Energie aus dem Generator in den Energiespeicher einspeicherbar und im zweiten Schaltzustand des Feldeffekttransistors wird die in dem Energiespeicher gespeicherte Energie an einen an den Ausgangsanschlüssen angeschlossenen Verbraucher abgeben. Die Drain ist mit einem ersten Eingang und die Source mit einem zweiten Eingang eines Komparators verbunden. Der Ausgang des Komparators ist über einen Regler mit dem Gate des Feldeffekttransistors verbunden.

Aufgabe der Erfindung ist es, eine Vorrichtung der eingangs genannten Art zu schaffen, die einen einfachen Aufbau aufweist, es aber dennoch ermöglicht, die Impedanz eines Verbrauchers verlustarm derart an die Quellenimpedanz eines insbesondere eine breitbandige, nichtharmonische Ausgangsspannung aufweisenden Generators anzupassen, dass dieser eine möglichst hohe Leistung abgibt.

Diese Aufgabe wird mit den Merkmalen des Anspruchs 1 gelöst.

Die erfindungsgemäße Vorrichtung ermöglicht es, durch eine implizite Puls-Pausen-Regelung die Impedanz eines Verbrauchers ständig derart an einen Mikro- oder feinwerktechnischen Generator anzupassen, dass die von dem Generator an die Eingangsanschlüsse der Vorrichtung angelegte momentane Eingangsspannung entweder sehr nahe an der Spannung liegt, bei welcher der Generator seine maximale Leistung abgibt, oder mit dieser Spannung übereinstimmt. Mit Hilfe der Vorrichtung ist eine derartige Leistungsanpassung sogar dann möglich, wenn die Ausgangsspannung deutlich größer ist als die Eingangsspannung. Weil das Umschalten der Schalteinrichtung gesperrt ist, wenn an den Eingangsanschlüssen keine ausreichende Spannung anliegt, arbeitet der Konverter besonders verlustarm. Die Vorrichtung lässt sich daher mit Energy Harvesting Generatoren kombinieren. Generatorleistungen von wenigen 10 µW reichen für den Betrieb der Vorrichtung aus. Die Vorrichtung ermöglicht dadurch auch bei alternierenden, pulsierenden oder stetigen Eingangsspannungen eine quasi kontinuierliche Impedanzanpassung. Die Impedanzanpassung weist eine hohe Dynamik auf. Außerdem ergeben sich kompakte Abmessungen der Vorrichtung. Die Vorrichtung kann energiesparend betrieben werden.

Vorteilhaft ist, wenn der Energiespeicher mindestens eine Induktivität aufweist. Es sind aber auch andere Ausgestaltungen denkbar, bei denen der Energiespeicher mehrere elektrische Kondensatoren umfasst, die mit Hilfe der Schalteinrichtung zwischen einer Parallel- und einer Reihenschaltung umschaltbar sind.

Bei einer zweckmäßigen Ausgestaltung der Erfindung weist der Komparator eine Hysterese auf. Die Anzahl der Schaltvorgänge, die das Schaltelement durchführt, reduziert sich dann, wodurch die Vorrichtung noch energiesparender betrieben werden kann.

Bei einer anderen vorteilhaften Ausgestaltung der Erfindung ist der Ausgang des Komparators über ein Verzögerungsglied mit dem Steuereingang der Schalteinrichtung verbunden. Auch durch diese Maßnahme kann die Anzahl der Schaltvorgänge, die das Schaltelement durchführt, auf einfache Weise reduziert werden.

Zweckmäßig und vorteilhaft ist, wenn die Eingangsanschlüsse über eine als Puffer dienende Eingangskapazität miteinander verbunden sind. Die Eingangskapazität kann dann während der Phasen, in denen der Konverter inaktiv ist, Energie aus dem Generator aufnehmen, d.h. die während des ersten Betriebszustandes vom Generator abgegebene Energie wird in der Eingangskapazität zwischengespeichert. Die Eingangskapazität muss so dimensioniert sein, dass die über ihr anliegende Eingangsspannung jederzeit den durchaus auch nicht harmonischen Generatorspannungen folgen kann, damit jederzeit bestmögliche Impedanzenpassung vorliegt.

Bei einer zweckmäßigen Ausgestaltung der Erfindung hat die aktive Diode einen Feldeffekttransistor als Schaltelement auf. Die Vorrichtung kann dadurch noch energiesparender betrieben werden.

Bei einer Weiterbildung der Erfindung weist die Schalteinrichtung einen Schalttransistor auf, über den der Energiespeicher mit einem Eingangsanschluss verbindbar ist, wobei der Schalttransistor einen Steuereingang aufweist, der mit dem Ausgang des Komparators in Steuerverbindung steht. Dadurch ergibt sich eine implizite PulsPausen-Regelung des aus dem Energiespeicher, der Schalteinrichtung und der Ansteuereinrichtung gebildeten Schaltreglers, wodurch eine stabile und verlustarme Spannungskonvertierung auch bei wechselnden Eingangsspannungen und bei hohen Quellenimpedanzen ermöglicht wird.

Vorteilhaft ist, wenn die Ansteuereinrichtung einen Taktgeber zum Erzeugen eines Taktsignals aufweist, und wenn der Ausgang des Komparators über eine mit dem Taktgeber verbundene Synchronisationseinrichtung synchron zum Taktsignal mit dem Schalttransistor in Steuerverbindung steht. Durch den Taktgeber wird ein begrenzter Strom im Energiespeicher ermöglicht. Dadurch reduzieren sich die Leitungsverluste. Somit erfolgt die Leistungsanpassung noch verlustarmer.

Der Konverter kann unterschiedliche Topologien aufweisen. Bei einer zweckmäßigen Ausgestaltung der Erfindung verbindet der Energiespeicher einen ersten Eingangsanschluss der Vorrichtung mit einem Knoten, wobei der Knoten über das Schaltelement mit einem Ausgangsanschluss der Vorrichtung und über die Schalteinrichtung mit einem zweiten Eingangsanschluss der Vorrichtung verbindbar ist. Der Konverter ist dann für einen Boost-Betrieb konfiguriert, d.h. die Ausgangsspannung ist größer als die Eingangsspannung der Vorrichtung.

Bei einer anderen vorteilhaften Ausführungsform der Erfindung sind ein erster Eingangsanschluss der Vorrichtung über die Schalteinrichtung und ein zweiter Eingangsanschluss der Vorrichtung über das Schaltelement mit einem Knoten verbindbar, wobei der Knoten über den Energiespeicher mit einem Ausgangsanschluss der Vorrichtung verbunden ist. Der Konverter ist dann als sogenannter Buck-Konverter konfiguriert, d.h. die Ausgangsspannung ist kleiner als die Eingangsspannung der Vorrichtung.

Bei einer Weiterbildung der Erfindung sind ein erster Eingangsanschluss der Vorrichtung über die Schalteinrichtung und ein Ausgangsanschluss der Vorrichtung über das Schaltelement mit einem Knoten verbindbar, wobei der Knoten über den Energiespeicher mit einem zweiten Eingangsanschluss (z.B. Masseanschluss) der Vorrichtung verbunden ist. Die Ausgangsspannung kann dann größer, gleich oder kleiner als die Eingangsspannung der Vorrichtung sein. Somit kann die Impedanz des Verbrauches in einem noch größeren Bereich im Sinne einer maximalen Leistungsübertragung an die Quellenimpedanz des Generators angepasst werden.

Vorteilhaft ist, wenn der Detektor einen Stromsensor zur Messung des durch die Eingangsanschlüsse fließenden Eingangsstroms aufweist, wenn der Stromsensor über einen Strom-Spannungs-Wandler mit einem ersten Eingang einer Vergleichseinrichtung verbunden ist, wenn ein zweiter Eingang der Vergleichseinrichtung mit einer Referenzspannungsquelle verbunden ist, und wenn der Ausgang der Vergleichseinrichtung mit dem Messsignalausgang des Detektors verbunden ist. Dabei kann der Strom-Spannungs-Wandler im einfachsten Fall ein elektrischer Widerstand sein, welcher der Quellenimpedanz des Generators entspricht. Die von der Referenzspannungsquelle abgegebene Spannung ist bevorzugt so gewählt, dass sie der Ausgangsspannung des Strom-Spannungs-Wandlers entspricht, wenn der Ausgangsstrom des Generators dem halben Kurzschlussstrom des Generators entspricht und somit die vom Generator abgegebene Leistung maximal ist. Eine zweckmäßige Ausgestaltung zur Erzeugung der Referenzspannung ist ein hochohmiger resistiver Spannungsteiler, der parallel zum Eingang bzw. parallel zur Eingangskapazität geschaltet ist. Am Mittelabgriff des Spannungsteilers ist dann die Referenzspannung verfügbar. Es wird also keine externe Referenzspannungsquelle benötigt. Dies spart Bauvolumen und vermeidet zusätzliche Leistungsverluste.

Bevorzugt ist zur Glättung der Ausgangsspannung eine Ausgangskapazität parallel zu den Ausgangsanschlüssen geschaltet. Mit Hilfe der Vorrichtung kann dann eine wechselnde Eingangsspannung effizient in eine quasikonstante Ausgangsspannung gewandelt werden.

Nachfolgend sind Ausführungsbeispiele der Erfindung anhand der Zeichnung näher erläutert. Es zeigt:
- Fig.1: ein Schaltbild einer einen Konverter aufweisenden Vorrichtung zur Impedanzanpassung eines elektrischen Verbrauchers an die Quellenimpedanz eines Generators,
- Fig. 2: ein Schaltbild eines für Boost-Betrieb vorgesehenen Konverters,
- Fig. 3: ein Schaltbild eines Detektors zum Erfassen eines Messsignals für die Impedanzanpassung,
- Fig. 4: ein Schaltbild einer aktiven Diode,
- Fig. 5: ein Schaltbild eines ersten Ausführungsbeispiels einer Ansteuereinrichtung für eine steuerbare Schalteinrichtung des Konverters,
- Fig. 6: ein Timing Diagramm verschiedener elektrischer Signale eines ersten Ausführungsbeispiels der Vorrichtung, wobei auf der Abzisse die Zeit und auf der Ordinate bei den Signalen clk, Don, Dchg und DAD die elektrische Spannung und bei dem Signal IL der Strom aufgetragen sind,
- Fig. 7: ein Schaltbild eines zweiten Ausführungsbeispiels der Ansteuereinrichtung für die steuerbare Schalteinrichtung des Konverters,

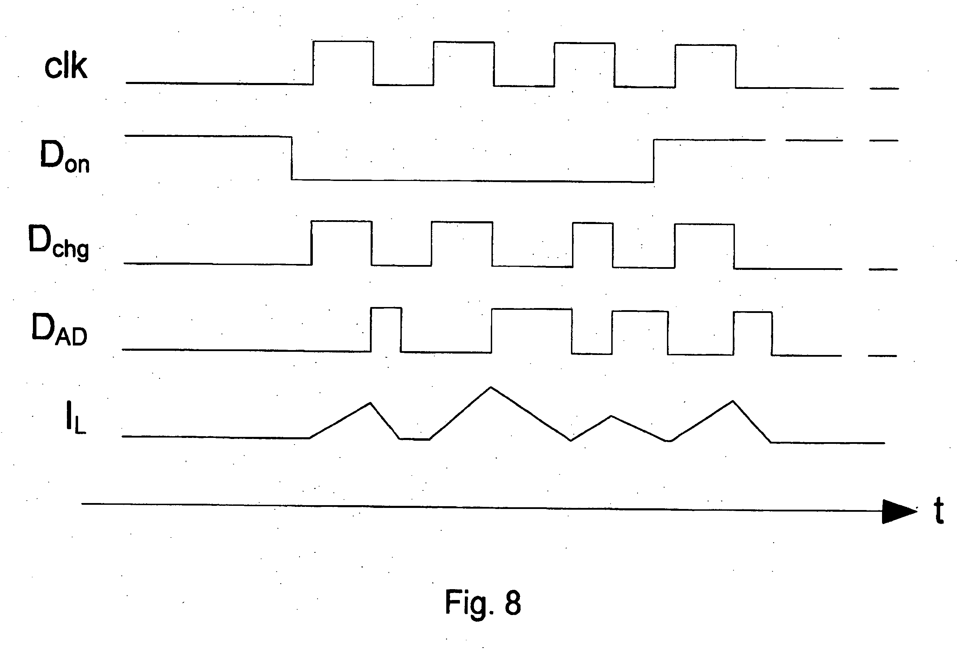

- Fig. 8: ein Timing Diagramm verschiedener elektrischer Signale eines zweiten Ausführungsbeispiels der Vorrichtung, wobei auf der Abzisse die Zeit und auf der Ordinate bei den Signalen clk, Don, Dchg und DAD die elektrische Spannung und bei dem Signal I_{L} der Strom aufgetragen sind,
- Fig. 9: ein Teilschaltbild eines Buck-Konverters, und
- Fig. 10: ein Teilschaltbild eines Boost- und Buck-Konverters.

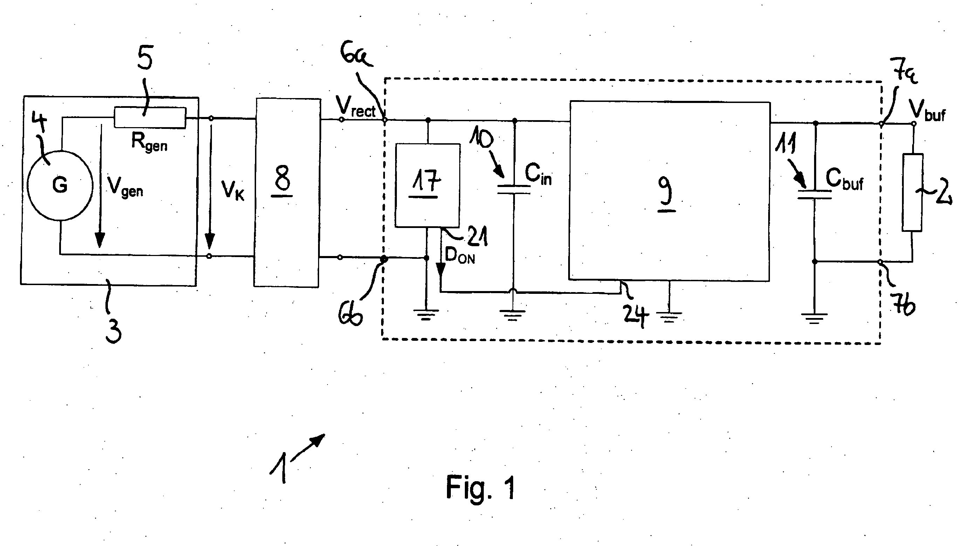

Eine in Fig. 1 im Ganzen mit 1 bezeichnete Vorrichtung zur Impedanzanpassung eines elektrischen Verbrauchers 2 an einen Generators 3 weist Eingangsanschlüsse 6a, 6b und Ausgangsanschlüsse 7a, 7b auf. Die Eingangsanschlüsse 6a, 6b sind über einen Gleichrichter 8 mit dem Ausgang des Generators 3 verbunden. An den Ausgangsanschlüssen 7a, 7b ist der Verbraucher 2 angeschlossen.

Der Generator 3 gibt an seinem Ausgang typischerweise eine Wechselpannung ab, die von einer Spannungsquelle 4 erzeugt wird, die mit einer Quellenimpedanz 5 in Reihe geschaltet ist. Die Wechselspannung kann von einem sinusförmigen Verlauf abweichen und kann nicht harmonische Komponenten aufweisen. Es ist aber auch möglich, dass der Generator 3 ein Gleichspannungsgenerator ist. In diesem Fall kann der Gleichrichter 8 entfallen.

Die Reihenschaltung, bestehend aus der Spannungsquelle 4 und der Quellenimpedanz 5 ist parallel zum Ausgang des Generators 3 angeordnet. Die von der Spannungsquelle 4 erzeugte Spannung entspricht der Leerlaufspannung V_{gen} des Generators, also der Spannung, die am Ausgang des Generators 3 anliegt, wenn dieser nicht mit einem Strom belastet ist. Wenn am Ausgang des Generators 3 ein elektrischer Strom entnommen wird, verursacht dieser an der Quellenimpedanz 5 einen Spannungsabfall. In diesem Fall ist die Ausgangsspannung V_{K} des Generators 3 um den Spannungsabfall gegenüber der Leerlaufspannung reduziert. Der Generator 3 gibt an seinem Ausgang typischerweise seine maximale Leistung ab, wenn Ausgangsspannung VK halb so groß ist wie die Leerlaufspannung Vgen.

Die Eingangsanschlüsse 6a, 6b sind mit den Ausgangsanschlüssen 7a, 7b über einen Konverter 9 verbunden, mittels dem die zwischen den Eingangsanschlüssen 6a, 6b anliegende, der Ausgangsspannung Vrect des Gleichrichters 8 entsprechende Eingangsspannung in eine davon abweichende, zwischen den Ausgangsanschlüssen 7a, 7b anliegende Ausgangsspannung konvertierbar ist. Die Eingangsanschlüsse 6a, 6b sind über eine Eingangskapazität 10, die als Puffer dient, miteinander verbunden. In entsprechender Weise sind die Ausgangsanschlüsse 7a, 7b über eine Ausgangskapazität 11 miteinander verbunden.

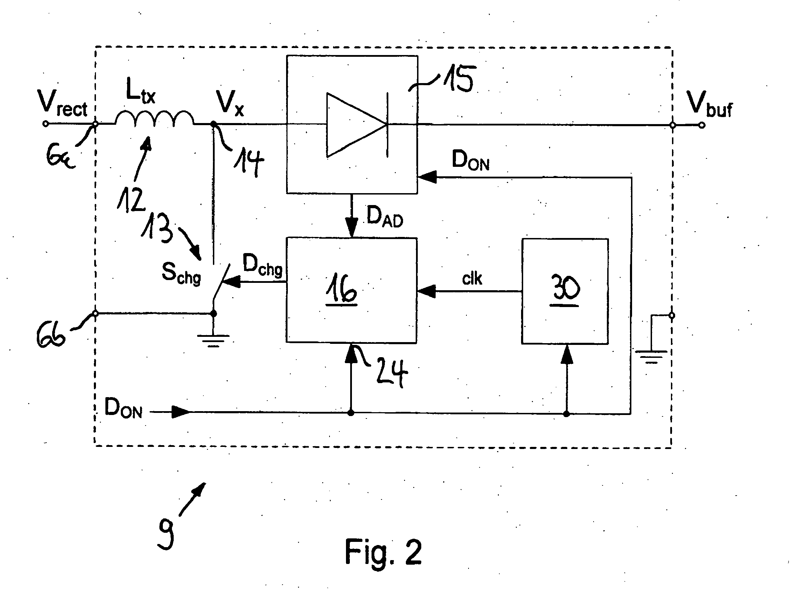

Der Konverter hat als Energiespeicher eine Induktivität 12, die mit einer steuerbaren Schalteinrichtung 1 3 verbunden ist. Bei dem in Fig. 2 gezeigten Ausführungsbeispiel ist die Schalteinrichtung 13 durch einen Schalttransistor gebildet, der eine Source, eine Drain und ein Gate auffweist.

Die Induktivität 12 verbindet einen ersten Eingangsanschluss 6a mit einem Knoten 14, der über die Source-Drain Strecke der Schalteinrichtung 13 mit einem zweiten, auf Massepotential liegenden Eingangsanschluss 6b verbunden ist. Der Knoten ist außerdem über eine aktive Diode 15 mit mindestens einem ersten Ausgangsanschluss 7a verbunden. Ein zweiter Ausgangsanschluss 7b liegt auf Massepotential.

Das Gate der Schalteinrichtung 13 ist an einer Ansteuereinrichtung 16 angeschlossen, mittels welcher die Schalteinrichtung 13 in eine Offen- und eine Schließstellung bringbar ist. In der Schließstellung ist die Induktivität 12 parallel zu den die Eingangsspannung aufweisenden Eingangsanschlüssen 6a, 6b geschaltet, wodurch der Strom in der Induktivität 12 zunimmt und magnetische Energie in der Induktivität 12 gespeichert wird. In der Offenstellung wird die Energie in Form einer elektrischen Induktionsspannung freigesetzt und über die aktive Diode 15 an den Verbraucher 2 abgegeben.

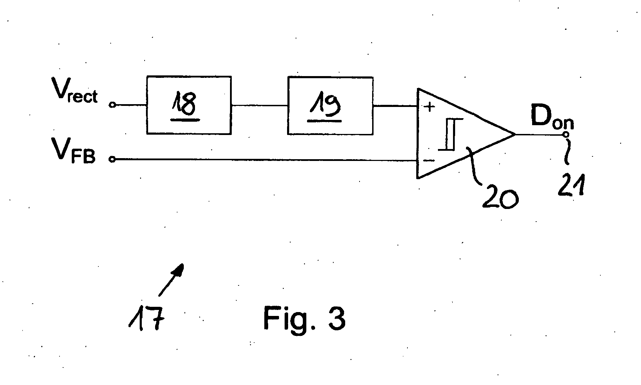

Die Vorrichtung weist außerdem einen mit den Eingangsanschlüssen verbundenen Detektor 17 zum Erfassen eines Messsignals für die Impedanzanpassung auf Wie in Fig. 3 erkennbar ist, hat der Detektor 1 7 einen Stromsensor 18, der den über die Eingangsanschlüsse 6a, 6b fließenden Strom misst. Ein Ausgang des Stromsensors 18 ist über einen Strom-Spannungs-Wandler 19 mit einem ersten Eingang einer eine Hysterese aufweisenden Vergleichseinrichtung 20 verbunden. An einem zweiten Eingang der Vergleichseinrichtung 20 liegt eine Referenzspannung an, deren Wert so gewählt ist, dass sie mit der Spannung am ersten Eingang der Vergleichseinrichtung 20 übereinstimmt, wenn der Generator 3 seine maximale Leistung abgibt.

Eine zweckmäßige Ausgestaltung zur Erzeugung der Referenzspannung ist ein hochohmiger resistiver Spannungsteiler der parallel zum Eingang bzw. parallel zur Eingangskapazität geschaltet ist. Am Mittelabgriff des Spannungsteilers ist dann die Referenzspannung verfügbar. Es wird also keine externe Referenzspannungsquelle benötigt. Dies spart Bauvolumen und vermeidet zusätzliche leistungsverluste. Es sind aber auch andere Ausgestaltungen des Detektors 17 denkbar, mit denen ein entsprechendes Messsignal ausgebbar ist.

Das am Messsignalausgang 21 der Vergleichseinrichtung 20 anliegende Messsignal Don weist den logischen Wert "1" auf, wenn die Eingangsspannung der Vorrichtung 1 in einem durch die Referenzspannung und die Hysterese vorbestimmten Bereich liegt, d.h. wenn die Leistungsabgabe des Generators 3 maximal ist oder zum Maximalwert dicht benachbart ist. Wenn die Eingangsspannung der Vorrichtung 1 nicht in dem genannten Bereich liegt, hat das Messsignal Don den logischen Wert "0".

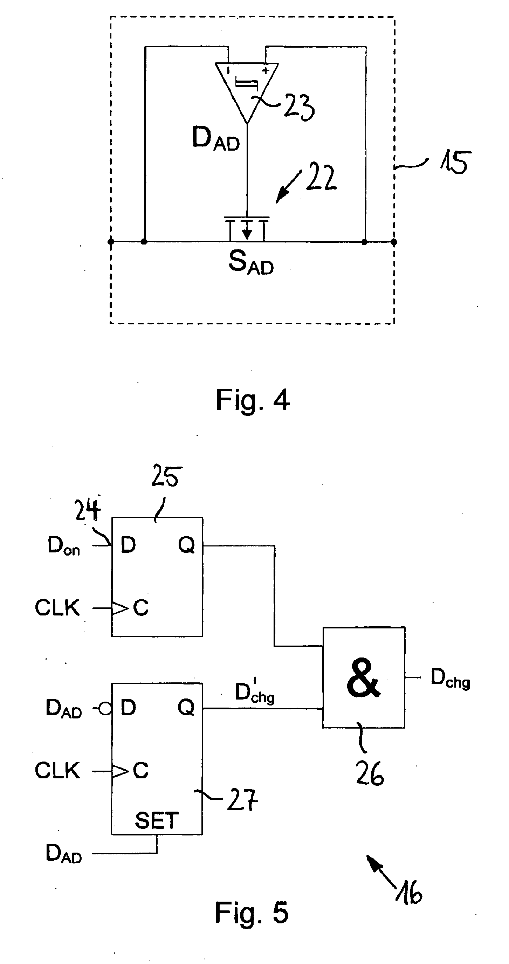

In Fig. 4 ist erkennbar, dass die aktive Diode 15 als Schaltelement 22 einen Feldeffekttransistor mit einer Drain, einer Source und einem Gate aufweist. Außerdem hat die aktive Diode 15 einen Komparator 23, der eine vorzugsweise Hysterese aufweist. Der Komparator 23 hat einen mit der Source verbundenen ersten Komparatoreingang und einen mit der Drain verbundenen zweiten Komparatoreingang. Der Ausgang des Komparators 23 ist mit dem Gate des Schaltelements 22 verbunden. Die aktive Diode 15 kann außerdem eine Biasspannungsschaltung aufweisen, die in der Zeichnung nicht näher dargestellt ist.

In Fig. 5 ist erkennbar, dass ein erstes Ausführungsbeispiel der Ansteuereinrichtung 16 einen Aktivierungseingang 24 aufweist, der mit dem Messsignalausgang 21 des Detektors 17 verbunden ist. Mit Hilfe des Aktivierungseingangs 24 ist die Ansteuereinrichtung 16 in einen ersten und einen zweiten Betriebszustand bringbar. Im ersten Betriebszustand befindet sich die Schalteinrichtung 1 3 in der Offenstellung und das Umschalten in die Schließstellung ist gesperrt. Der Konverter 9 ist also abgeschaltet bzw. inaktiv. Im zweiten Betriebszustand ist die Schalteinrichtung 13 zwischen der Offen- und der Schließstellung umschaltbar, so dass der Konverter 9 die Eingangsspannung in die Ausgangsspannung konvertiert, d.h. es wird Energie von der Eingangskapazität 10 über den Konverter 9 zum Verbraucher 2 und in die Ausgangskapazität 11 übertragen.

Der Aktivierungseingang 24 ist mit dem D-Eingang eines ersten D-Flip-Flops 25 verbunden, das mit seinem Ausgang an einem ersten Eingang eines UND-Gatters 26 angeschlossen ist. Die Ansteuereinrichtung 16 hat außerdem ein zweites D-Flip-Flop 27, das mit seinem invertierenden D-Eingang mit dem Ausgang des Komparators 23 verbunden ist. Der Ausgang des Komparators 23 ist außerdem an einem Setz-Eingang des zweiten D-Flip-Flops 27 angeschlossen. Ein Ausgang des zweiten D-Flip-Flops 27 ist mit einem zweiten Eingang des UND-Gatters 26 verbunden. In Fig. 5 ist außerdem erkennbar, dass jedes D-Flip-Flop 25, 28 einen Taktsignaleingang hat, an dem ein Taktsignal anliegt, das von einem Taktgeber 30 bereitgestellt wird. Der Ausgang des UND-Gatters 26 ist mit dem Gate der Schalteinrichtung 13 verbunden. Der Ausgang des UND-Gatters 26 ist mit dem Gate der Schalteinrichtung 1 3 verbunden. Die Schalteinrichtung 1 3 wird also in Abhängigkeit von dem am Ausgang des UND-Gatters 26 anliegenden Steuersignal Dchg geöffnet und geschlossen.

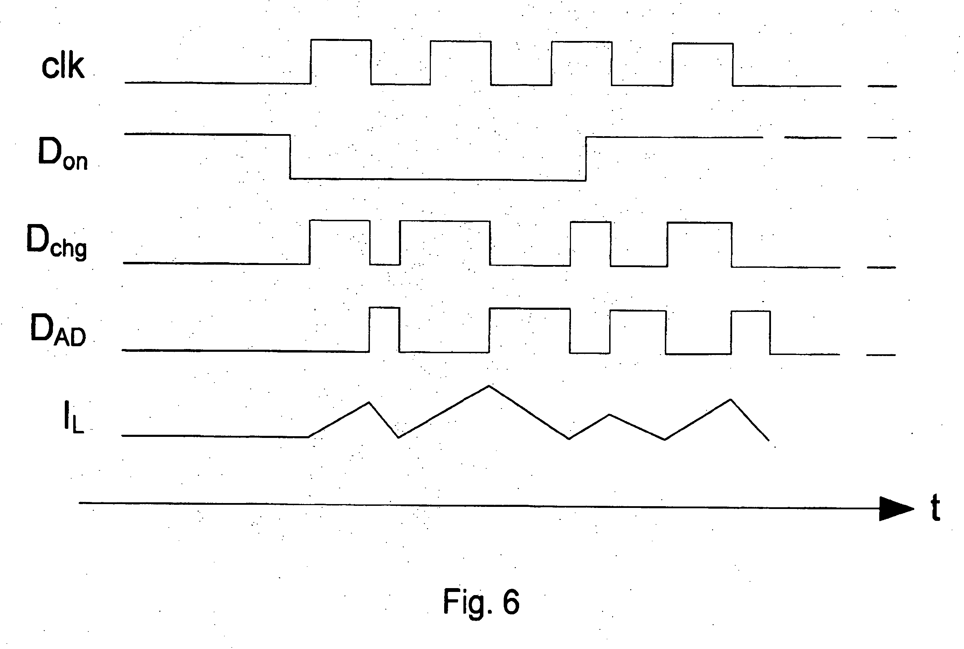

Nachfolgend wird die Arbeitsweise des Konverters 9 anhand von Fig. 6 erläutert.

Der Konverter 9 wird über das Messsignal Don des Detektors 17 aktiviert. Der Konverter 9 war bis dahin hochohmig, d.h. die Schalteinrichtung 13 und das als Schaltelement 22 waren jeweils geöffnet und die Induktivität 12 war unbestromt.

Über die Ansteuereinrichtung 16 wird durch die Verknüpfung des Messsignals Don und des rechteckigen Taktsignals clk am Ausgang des UND-Gatters 26 ein Startimpuls generiert. Dadurch wird die Schalteinrichtung 13 eine Halbperiode lang geschlossen, d.h. der Knoten 14 wird über die wird die Schalteinrichtung 1 3 mit dem Massepotential verbunden. Während dieser Halbperiode baut sich in der Induktivität 12 initial ein kontinuierlich zunehmender Strom auf Dabei nimmt die Induktivität 12 Energie von der Eingangskapazität 10 und/oder dem Generator 3 auf

Nach dieser Halbperiode wird synchron mit der fallenden Taktflanke des Taktsignals clk die Schalteinrichtung 1 3 wieder geöffnet, wodurch in der Induktivität 12 eine Spannung induziert wird, die den Komparator 23 umschaltet. Dadurch wird die aktive Diode 15 durchgeschaltet, d.h. der Knoten 14 wird über das Schaltelement 22 niederohmig mit dem ersten Ausgangsanschluss 7a verbunden. Der Strom IL in der Induktivität 12 fließt weiter, nimmt aber ab.

Wird der Strom, der durch die Induktivität 12 und das Schaltelement 22 fließt, zu gering, wird das durch den Komparator 23 detektiert und der Pegel an dessen Ausgang wechselt (Signal DAD). Dadurch sperrt das Schaltelement 22 der aktiven Diode 15.

Da das Ausgangssignal DAD des Komparators 23 auch am D-Eingang des zweiten D-Flip-Flops 27 der Ansteuereinrichtung 16 anliegt, wird mit dem Pegelwechsel des Ausgangssignals DAD auch direkt die Schalteinrichtung 13 wieder geöffnet. Hierdurch wird implizit eine Puls-Pause Anpassung erreicht.

Daraufhin steigt der Strom durch die Induktivität 12 wieder an. Mit der nächsten Periode des Taktsignals clk wird die Schalteinrichtung 13 geschlossen und die oben genannten Schritte werden erneut durchlaufen.

Der Strom IL in der Induktivität 12 steigt also immer für die verbleibende Zeit einer Taktperiode an, wobei Energie von der Eingangskapazität 10 in die Induktivität 12 übertragen wird.

Bei dem in Fig. 5 gezeigten Ausführungsbeispiel der Ansteuereinrichtung 16 wird die Schalteinrichtung 13 immer taktsynchron geöffnet, aber asynchron zum Takt vom Ausgangsignal DAD der aktiven Diode wieder geschlossen.

Wechselt der Pegel des Messsignals Don des Detektors 17 wieder zurück, wird dies von der Ansteuereinrichtung 16 erkannt. Der Energietransfer über den Konverter 9 bzw. das Schalten der Induktivität 12 endet mit dem nächsten Sperren der aktiven Diode 15, d.h. wenn sich der Strom durch die Induktivität 12 das nächste mal über die aktive Diode 15 in den ersten Ausgangsanschluss und/oder die Ausgangskapazität 11 abgebaut hat.

Die Anpassung des Puls-Pause Verhältnisses an die aktuell gegebenen Spannungsunterschiede von erstem Eingangsanschluss 6a und erstem Ausgangsanschluss 7a basiert auf einem zeitlichen Gegenkopplungseffekt: Ist in einem Takt die Strom-Ladephase (Schalteinrichtung 13 geschlossen) länger als notwendig, so baut sich ein relativ großer Strom auf Um diesen wieder abzubauen muss die nächste Strom-Entladephase (Schaltelement 22 der aktiven Diode 15 geschlossen) entsprechend lang sein, damit sich der Strom durch die Induktivität 12 wieder abbauen kann. Daraufhin wird aber die dann folgende Strom-Ladephase kürzer. D.h. das Puls-Pause Verhältnis hält sich somit automatisch im Gleichgewicht bzw. pendelt sich ein und konvergiert gegen einen Mittelwert.

Im Gegensatz zu einem geregelten synchronen Schaltregler ist es hier nicht von Nachteil, wenn das Puls-Pause Verhältnis etwas vom Sollwert abweicht. Die aktive Diode 15 sperrt Rückwärtsströme, und die gekoppelten Pegelwechsel versichern einen zuverlässigen Wechsel zwischen den Lade- und Entladephasen der Induktivität 12.

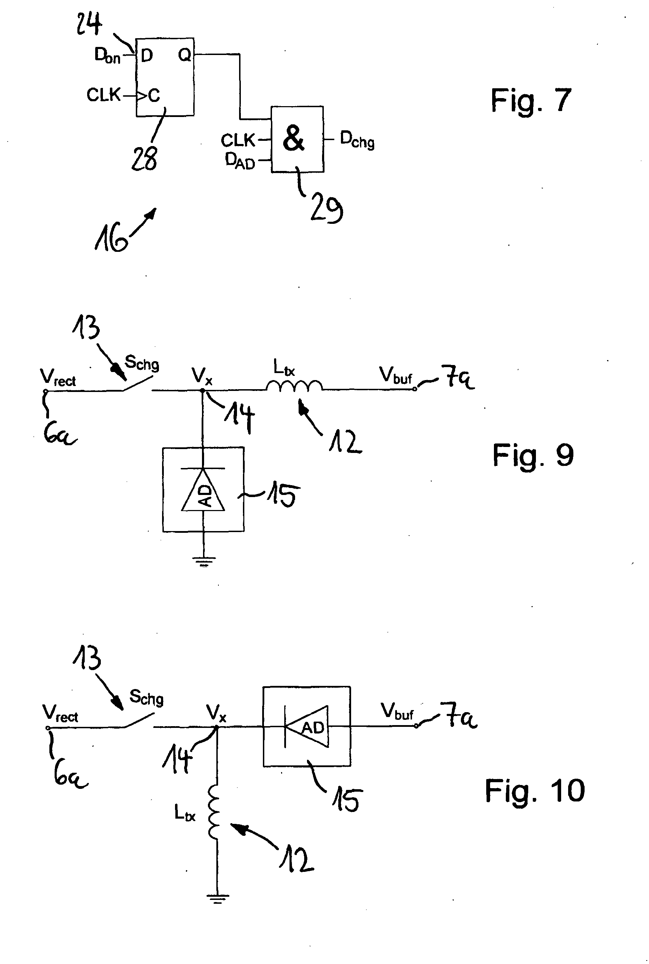

In Fig. 7 ist ein zweites Ausführungsbeispiel der Ansteuereinrichtung 16 abgebildet, bei dem die Schalteinrichtung 13 über das Steuersignal Dchg synchron zum Taktsignal clk geöffnet und geschlossen wird. Der Aktivierungseingang 24 ist zu diesem Zweck mit dem D-Eingang eines D-Flip-Flops 28 verbunden, das mit seinem Ausgang an einem ersten Eingang eines UND-Gatters 29 angeschlossen ist. An einem zweiten Eingang des UND-Gatters 29 liegt das Taktsignal clk an. Ein dritter Eingang des UND-Gatters ist mit dem Ausgang des Ausgang des Komparators 23 verbunden.

Auch bei dem zweiten Ausführungsbeispiel der Ansteuereinrichtung 16 wird der Konverter 9 wird über das Messsignal Don des Detektors aktiviert. Der Konverter 9 war bis dahin hochohmig, d.h. die Schalteinrichtung 13 und das als Schaltelement 22 waren jeweils geöffnet und die Induktivität 12 war unbestromt.

Über die Ansteuereinrichtung 16 wird durch die Verknüpfung des Messsignals Don und des Taktsignals clk am Ausgang des UND-Gatters 29 synchron zum Taktsignal clk ein Startimpuls generiert. Dadurch wird die Schalteinrichtung 13 eine Halbperiode lang geschlossen. Während dieser Halbperiode baut sich in der Induktivität 12 initial ein kontinuierlich zunehmender Strom auf Dabei nimmt die Induktivität 12 Energie von der Eingangskapazität 10 und dem Generator 3 auf

Nach dieser Halbperiode wird synchron mit der fallenden Taktflanke des Taktsignals clk die Schalteinrichtung 13 wieder geöffnet wodurch in der Induktivität 12 eine Spannung induziert wird, die einen Spannungsabfall an der Source-Drain-Strecke des Schaltelements 22 bewirkt, welcher den Komparator 23 umschaltet. Dadurch wird die aktive Diode 15 durchgeschaltet. Der Strom I_{L} in der Induktivität 12 fließt weiter, nimmt aber ab.

Wird der Strom, der durch die Induktivität 12 und das Schaltelement 22 fließt, zu gering, wird das durch den Komparator 23 detektiert und der Pegel an dessen Ausgang wechselt (Ausgangssignal D_{AD}). Dadurch sperrt das Schaltelement 22 der aktiven Diode 15.

Da das Ausgangssignal DAD des Komparators 23 am dritten Eingang des UND-Gatters 29 und das Taktsignal clk am zweiten Eingang des UND-Gatters 29 anliegt, wird erst mit der auf den Pegelwechsel des Ausgangssignals DAD folgenden Flanke des Taktsignals das Ausgangssignal D_{chg} des UND-Gatters 29 umgeschaltet und die Schalteinrichtung 13 wieder geöffnet. Hierdurch wird implizit eine Puls-Pause Anpassung mit Lückbetrieb erreicht.

Daraufhin steigt der Strom durch die Induktivität 12 wieder an. Mit der nächsten Periode des Taktsignals clk wird die Schalteinrichtung 13 geschlossen und die oben genannten Schritte werden erneut durchlaufen.

Wie in Fig. 9 erkennbar ist, kann der Konverter 9 auch als sogenannter Buck-Konverter ausgestaltet sein. Der erste Eingangsanschluss 6a ist dabei über die Schalteinrichtung 1 3 und der zweite Eingangsanschluss 6b sowie der zweite Ausgangsanschluss 7b sind über das Schaltelement 22 der aktiven Diode 15 mit dem Knoten 14 verbindbar. Der Knoten 14 ist über die Induktivität 12 mit dem ersten Ausgangsanschluss 7a verbunden.

Das in Fig. 10 gezeigte Ausführungsbeispiel des Konverters ist für Boost- und Buckbetrieb geeignet. Der erste Eingangsanschluss 6a ist dabei über die Schalteinrichtung 13 mit dem Konten 14 verbunden. Außerdem ist er Knoten 14 über das Schaltelement 22 der aktiven Diode 15 mit dem ersten Ausgangsanschluss 7a und über die Induktivität 12 mit dem zweiten Eingangsanschluss 6b und dem zweiten Ausgangsanschluss 7b verbunden.

## Patentansprüche

1. Vorrichtung (1) zur Impedanzanpassung eines elektrischen Verbrauchers (2) an die Quellenimpedanz (5) eines Generators (3), wobei die Vorrichtung (1) Eingangsanschlüsse (6a, 6b) zum Verbinden mit dem Generator (3) und Ausgangsanschlüsse (7a, 7b) zum Verbinden mit dem Verbraucher (2) aufweist, wobei die Vorrichtung (1) einen die Eingangsanschlüsse (6a, 6b) mit den Ausgangsanschlüssen (7a, 7b) verbindenden Konverter (9) hat, mittels dem eine zwischen den Eingangsanschlüssen (6a, 6b) anliegende Eingangsspannung in eine davon abweichende, zwischen den Ausgangsanschlüssen (7a, 7b) anliegende Ausgangsspannung konvertierbar Ist, wobei der Konverter (9) einen Energiespeicher, eine damit verbundene steuerbare Schalteinrichtung (13) und eine Ansteuereinrichtung (16) dafür aufweist, wobei die Schalteinrichtung (13) ein Gate aufweist, mittels dem sie derart in einen ersten sowie einen zweiten Schaltzustand bringbar ist, dass Im ersten Schallzustand Energie aus dem Generator (3) in den Energiespeicher einspeicherbar und im zweiten Schaltzustand in dem Energiespeicher gespeicherte Energie an den Verbraucher (2) abgebbar ist, wobei die Vorrichtung (1) einen mit den Eingangsanschlüssen (6a, 6b) verbundenen Detektor (17) zum Erfassen eines Messsignals für die Impedanzanpassung aufweist, wobei die Ansteuereinrichtung (16) einen Aktivierungseingang (24) aufweist, mittels dem sie in einen ersten und einen zweiten Betriebszustand bringbar ist, wobei die Ansteuereinrichtung (16) derart ausgestaltet ist, dass im ersten Betriebszustand der erste Schaltzustand vermieden wird und im zweiten Betriebszustand ein Wechsel zwischen den Schaltzuständen erfolgt, und wobei der Detektor (17) mit seinem Messsignalausgang mit dem Aktivierungseingang (24) verbunden ist **dadurch gekennzeichnet, dass** der Energiespeicher über eine aktive Diode (15) mit mindestens einem der Ausgangsanschlüsse (7a, 7b) verbunden ist, dass die aktive Diode (15) ein steuerbares Schaltelement (22) und einen Komparator (23) hat, der einen mit einem ersten Lastanschluss des Schaltelements (22) verbundenen ersten Komparatoreingang und einen mit einem zweiten Lastanschluss des Schaltelements (22) verbundenen zweiten Komparatoreingang aufweist, dass der Ausgang des Komparators (23) mit einem Steueranschluss des Schaltelements (22) und einem Steuereingang der Schalteinrichtung (13) verbunden ist, dass die Ansteuereinrichtung (16) ein erstes D-Flip-Flop (25), ein zweites D-Flip-Flop (27) und ein UND-Gatter 26 aufweist, dass das erste D-Flip-Flop (25) mit seinem D-Eingang mit dem Aktivierungseingang (24) der aktiven Diode (15) und mit seinem Ausgang mit dem ersten Eingang des UND-Gatters (26) verbunden ist, dass das zweite D-Flip-Flop (27) mit seinem invertierenden D-Eingang und seinem Setz-Eingang mit dem Ausgang des Komparators (23) und mit seinem Ausgang mit einem zweiten Eingang des UND-Gatters (26) verbunden ist, und dass der Ausgang des UND-Gatters (26) mit dem Gate der Schalteinrichtung (13) verbunden ist.

2. Vorrichtung (1) nach Anspruch 1, **dadurch gekennzeichnet, dass** der Energiespeicher mindestens eine Induktivität (12) aufweist.

3. Vorrichtung (1) nach Anspruch 1 oder 2, **dadurch gekennzeichnet, dass** der Komparator (23) eine Hysterese aufweist.

4. Vorrichtung (1) nach einem der Ansprüche 1 bis 3, **dadurch gekennzeichnet, dass** der Ausgang des Komparators (23) über ein Verzögerungsglied mit dem Steuereingang der Schalteinrichtung (13) verbunden Ist.

5. Vorrichtung (1) nach einem der Ansprüche 1 bis 4, **dadurch gekennzeichnet, dass** die Eingangsanschlüsse (6a, 6b) über eine als Puffer dienende Eingangskapazität (10) miteinander verbunden sind.

6. Vorrichtung (1) nach einem der Ansprüche 1 bis 5, **dadurch gekennzeichnet, dass** das Schaltelement (22) ein Feldeffekttransistor ist.

7. Vorrichtung (1) nach einem der Ansprüche 1 bis 6, **dadurch gekennzeichnet, dass** die Ansteuereinrichtung (16) einen Taktgeber zum Erzeugen eines Taktsignals aufweist, und dass der Ausgang des Komparators (23) über eine mit dem Taktgeber verbundene Synchronisationseinrichtung synchron zum Taktsignal mit der Schalteinrichtung (13) in Steuerverbindung steht

8. Vorrichtung (1) nach einem der Ansprüche 1 bis 7, **dadurch gekennzeichnet, dass** der Energlespeicher einen ersten Eingangsanschluss (6a) der Vorrichtung (1) mit einem Knoten (14) verbindet, und dass der Knoten (14) über das Schaltelement (22) mit einem Ausgangsanschluss (7a) der Vorrichtung und über die Schalteinrichtung (13) mit einem zweiten Eingangsanschluss (6b) der Vorrichtung (1) verbindbar ist.

9. Vorrichtung (1) nach einem der Ansprüche 1 bis 8, **dadurch gekennzeichnet, dass** ein erster Eingangsanschluss (6a) der Vorrichtung über die Schalteinrichtung (13) und ein zweiter Eingangsanschluss (6b) der Vorrichtung (1) über das Schaltelement (22) mit einem Knoten (14) verbindbar sind, und dass der Knoten (14) über den Energiespeicher mit einem Ausgangsanschluss (7a) der Vorrichtung (1) verbunden ist.

10. Vorrichtung (1) nach einem der Ansprüche 1 bis 9, **dadurch gekennzeichnet, dass** ein erster Eingangsanschluss (6a) der Vorrichtung (1) über die Schalteinrichtung (13) und ein Ausgangsanschluss (7a) der Vorrichtung (1) über das Schaltelement (22) mit einem Knoten (14) verbindbar sind, und dass der Knoten (14) über den Energiespeicher mit einem zweiten Eingangsanschluss (6b) der Vorrichtung (1) verbunden ist.

11. Vorrichtung (1) nach einem der Ansprüche 1 bis 10, **dadurch gekennzeichnet, dass** der Detektor (17) einen Stromsensor (18) zur Messung des durch die Eingangsanschlüsse (6a, 6b) fließenden Eingangsstroms aufweist, dass der Stromsensor (18) über einen Strom-Spannungs-Wandler (19) mit einem ersten Eingang einer Vergleichseinrichtung (20) verbunden ist, dass ein zweiter Eingang der Vergleichseinrichtung (20) mit einer Referenzspannungsquelle verbunden ist, und dass der Ausgang der Vergleichseinrichtung (20) mit dem Messsignalausgang des Detektors (17) verbunden ist.

12. Vorrichtung (1) nach einem der Ansprüche 1 bis 11, **dadurch gekennzeichnet, dass** zur Glättung der Ausgangsspannung eine Ausgangskapazität (11) parallel zu den Ausgangsanschlüssen (7a, 7b) geschaltet ist.

13. Vorrichtung (1) nach einem der Ansprüche 1 bis 12, **dadurch gekennzeichnet, dass** die Schalteinrichtung (13) einen Schalttransistor aufweist.

## Claims

1. Apparatus (1) for the impedance matching of an electrical load (2) to the source impedance (5) of a generator (3), wherein the apparatus (1) has input connections (6a, 6b) for connection to the generator (3) and output connections (7a, 7b) for connection to the load (2), wherein the apparatus (1) has a converter (9) which connects the input connections (6a, 6b) to the output connections (7a, 7b) and by means of which an input voltage which is applied between the input connections (6a, 6b) can be converted into an output voltage which differs from the said input voltage and is produced between the output connections (7a, 7b), wherein the converter (9) has an energy storage means, a controllable switching device (13) which is connected to the said energy storage means, and an actuation device (16) for the said switching device, wherein the switching device (13) has a gate by means of which it can be moved to a first and a second switching state in such a way that energy from the generator (3) can be stored in the energy storage means in the first switching state and energy which is stored in the energy storage means can be output to the load (2) in the second switching state, wherein the apparatus (1) has a detector (17), which is connected to the input connections (6a, 6b), for detecting a measurement signal for the impedance matching, wherein the actuation device (16) has an activation input (24) by means of which it can be moved to a first and a second operating state, wherein the actuation device (16) is designed in such a way that the first switching state is avoided in the first operating state and a changeover is made between the switching states in the second operating state, and wherein the detector (17) is connected to the activation input (24) by way of its measurement signal output, **characterized in that** the energy storage means is connected to at least one of the output connections (7a, 7b) by means of an active diode (15), **in that** the active diode (15) has a controllable switching element (22) and a comparator (23) which has a first comparator input which is connected to a first load connection of the switching element (22) and has a second comparator input which is connected to a second load connection of the switching element (22), **in that** the output of the comparator (23) is connected to a control connection of the switching element (22) and to a control input of the switching device (13), **in that** the actuation device (16) has a first D-type flip-flop (25), a second D-type flip-flop (27) and an AND gate 26, **in that** the first D-type flip-flop (25) is connected to the activation input (24) of the active diode (15) by way of its D input and is connected to the first input of the AND gate (26) by way of its output, **in that** the second D-type flip-flop (27) is connected to the output of the comparator (23) by way of its inverting D input and its Set input and is connected to a second input of the AND gate (26) by way of its output, and **in that** the output of the AND gate (26) is connected to the gate of the switching device (13).

2. Apparatus (1) according to Claim 1, **characterized in that** the energy storage means has at least one inductance (12).

3. Apparatus (1) according to Claim 1 or 2, **characterized in that** the comparator (23) exhibits hysteresis.

4. Apparatus (1) according to one of Claims 1 to 3, **characterized in that** the output of the comparator (23) is connected to the control input of the switching device (13) by means of a delay element.

5. Apparatus (1) according to one of Claims 1 to 4, **characterized in that** the input connections (6a, 6b) are connected to one another by means of an input capacitance (10) which serves as a buffer.

6. Apparatus (1) according to one of Claims 1 to 5, **characterized in that** the switching element (22) is a field-effect transistor.

7. Apparatus (1) according to one of Claims 1 to 6, **characterized in that** the actuation device (16) has a clock for generating a clock signal, and **in that** the output of the comparator (23) is connected in terms of control to the switching device (13) in synchronism with the clock signal by means of a synchronization device which is connected to the clock.

8. Apparatus (1) according to one of Claims 1 to 7, **characterized in that** the energy storage means connects a first input connection (6a) of the apparatus (1) to a node (14), and **in that** the load (14) can be connected to an output connection (7a) of the apparatus by means of the switching element (22) and can be connected to a second input connection (6b) of the apparatus (1) by means of the switching device (13).

9. Apparatus (1) according to one of Claims 1 to 8, **characterized in that** a first input connection (6a) of the apparatus can be connected to a node (14) by means of the switching device (13) and a second input connection (6b) of the apparatus (1) can be connected to a node (14) by means of the switching element (22), and **in that** the node (14) can be connected to an output connection (7a) of the apparatus (1) by means of the energy storage means.

10. Apparatus (1) according to one of Claims 1 to 9, **characterized in that** a first input connection (6a) of the apparatus (1) can be connected to a node (14) by means of the switching device (13) and an output connection (7a) of the apparatus (1) can be connected to a node (14) by means of the switching element (22), and **in that** the node (14) is connected to a second input connection (6b) of the apparatus (1) by means of the energy storage means.

11. Apparatus (1) according to one of Claims 1 to 10, **characterized in that** the detector (17) has a current sensor (18) for measuring the input current flowing through the input connections (6a, 6b), **in that** the current sensor (18) is connected to a first input of a comparison device (20) by means of a current/voltage converter (19), **in that** a second input of the comparison device (20) is connected to a reference voltage source, and **in that** the output of the comparison device (20) is connected to the measurement signal output of the detector (17).

12. Apparatus (1) according to one of Claims 1 to 11, **characterized in that** an output capacitance (11) is connected in parallel with the output connections (7a, 7b) in order to smooth the output voltage.

13. Apparatus (1) according to one of Claims 1 to 12, **characterized in that** the switching device (13) has a switching transistor.

## Revendications

1. Dispositif (1) destiné à adapter l'impédance d'un consommateur (2) électrique à l'impédance de source (5) d'un générateur (3), le dispositif (1) comportant des bornes d'entrée (6a, 6b) à relier avec le générateur (3) et des bornes de sortie (7a, 7b) à relier avec le consommateur (2), le dispositif (1) ayant un convertisseur (9) reliant les bornes d'entrée (6a, 6b) avec les bornes de sortie (7a, 7b), au moyen duquel une tension d'entrée appliquée entre les bornes d'entrée (6a, 6b) est convertible en une tension de sortie différente de celle-ci, appliquée entre les bornes de sortie (7a, 7b), le convertisseur (9) comportant un accumulateur d'énergie, un système de commutation (13) pilotable relié à ce dernier et un système d'amorçage (16) de celui-ci, le système de commutation (13) comportant une grille au moyen de laquelle il peut être amené dans un premier ainsi que dans un second état de commutation, de sorte que dans le premier état de commutation, de l'énergie puisse être mise en mémoire à partir du générateur (3) dans l'accumulateur d'énergie et dans le second état de commutation, de l'énergie accumulée dans l'accumulateur d'énergie puisse être délivrée au consommateur (2), le dispositif (1) comportant un détecteur (17) relié aux bornes d'entrée (6a, 6b), pour détecter un signal de mesure pour l'adaptation d'impédance, le système d'amorçage (16) comportant une entrée d'activation (24) au moyen de laquelle il peut être amené dans un premier et dans un second état de service, le système d'amorçage (16) étant conçu de sorte que dans le premier état de service, le premier état de commutation soit évité et dans le deuxième état de service, il s'effectue un changement entre les états de commutation et avec sa sortie pour signal de mesure, le détecteur (17) étant relié avec l'entrée d'activation (24), **caractérisé en ce que** l'accumulateur d'énergie est relié par l'intermédiaire d'une diode (15) active avec au moins une des bornes de sortie (7a, 7b), **en ce que** la diode (15) active dispose d'un élément de commutation (22) pilotable et d'un comparateur (23) qui comporte une première entrée de comparateur reliée avec une première borne de charge de l'élément de commutation (22) et une seconde entrée de comparateur reliée avec une seconde borne de charge de l'élément de commutation (22), **en ce que** la sortie du comparateur (23) est reliée avec une borne de commande de l'élément de commutation (22) et une entrée de commande du système de commutation (13), **en ce que** le système d'amorçage (16) comporte une première bascule D (25), une seconde bascule D (27) et une porte ET (26), **en ce qu'**avec son entrée D, la première bascule D (25) est reliée avec l'entrée d'activation (24) de la diode (15) active et avec sa sortie est reliée avec la première entrée de la porte ET (26), **en ce qu'**avec son entrée D inverseuse et son entrée de mise à un, la seconde bascule D (27) est reliée à la sortie du comparateur (23) et avec sa sortie, est reliée avec une seconde entrée de la porte ET (26) et **en ce que** la sortie de la porte ET (26) est reliée avec la grille du système de commutation (13).

2. Dispositif (1) selon la revendication 1, **caractérisé en ce que** l'accumulateur d'énergie présente au moins une inductance (12).

3. Dispositif (1) selon la revendication 1 ou la revendication 2, **caractérisé en ce que** le comparateur (23) présente une hystérésis.

4. Dispositif (1) selon l'une quelconque des revendications 1 à 3, **caractérisé en ce que** la sortie du comparateur (23) est reliée par l'intermédiaire d'un organe de temporisation avec l'entrée de commande du système de commutation (13).

5. Dispositif (1) selon l'une quelconque des revendications 1 à 4, **caractérisé en ce que** les bornes d'entrée (6a, 6b) sont reliées entre elles par l'intermédiaire d'une capacité d'entrée (10) servant de tampon.

6. Dispositif (1) selon l'une quelconque des revendications 1 à 5, **caractérisé en ce que** l'élément de commutation (22) est un transistor à effet de champ.

7. Dispositif (1) selon l'une quelconque des revendications 1 à 6, **caractérisé en ce que** le système d'amorçage (16) comporte un rythmeur pour générer un signal de rythme et **en ce que** par l'intermédiaire d'un système de synchronisation relié avec le rythmeur, la sortie du comparateur (23) est en liaison de commande avec le système de commutation (13), de manière synchrone avec le signal de rythme.

8. Dispositif (1) selon l'une quelconque des revendications 1 à 7, **caractérisé en ce que** l'accumulateur d'énergie relie une première borne d'entrée (6a) du dispositif (1) avec un noeud (14) et **en ce que** le noeud (14) peut être relié par l'intermédiaire de l'élément de commutation (22) avec une borne de sortie (7a) du dispositif et par l'intermédiaire du système de commutation (13) avec une seconde borne d'entrée (6b) du dispositif (1).

9. Dispositif (1) selon l'une quelconque des revendications 1 à 8, **caractérisé en ce qu'**une première borne d'entrée (6a) du dispositif peut être reliée par l'intermédiaire du système de commutation (13) et une seconde borne d'entrée (6b) du dispositif (1) peut être reliée par l'intermédiaire de l'élément de commutation (22) avec un noeud (14) et **en ce que** le noeud (14) est relié par l'intermédiaire de l'accumulateur d'énergie avec une borne de sortie (7a) du dispositif (1).

10. Dispositif (1) selon l'une quelconque des revendications 1 à 9, **caractérisé en ce qu'**une première borne d'entrée (6a) du dispositif (1) peut être reliée par l'intermédiaire du système de commutation (13) et une borne de sortie (7a) du dispositif (1) peut être reliée par l'intermédiaire de l'élément de commutation (22) avec un noeud (14) et **en ce que** le noeud (14) est relié par l'intermédiaire de l'accumulateur d'énergie avec une seconde borne d'entrée (6b) du dispositif (1).

11. Dispositif (1) selon l'une quelconque des revendications 1 à 10, **caractérisé en ce que** le détecteur (17) comporte un capteur de courant (18) pour mesurer le courant d'entrée circulant à travers les bornes d'entrée (6a, 6b), **en ce que** le capteur de courant (18) est relié par l'intermédiaire d'un convertisseur (19) courant-tension avec une première entrée d'un comparateur (20), **en ce qu'**une seconde entrée du comparateur (20) est reliée avec une source de tension de référence et **en ce que** la sortie du comparateur (20) est reliée avec la sortie pour signal de mesure du détecteur (17).

12. Dispositif (1) selon l'une quelconque des revendications 1 à 11, **caractérisé en ce que** pour lisser la tension de sortie, une capacité de sortie (11) est commutée à la parallèle des bornes de sortie (7a, 7b).

13. Dispositif (1) selon l'une quelconque des revendications 1 à 12, **caractérisé en ce que** le système de commutation (13) comporte un transistor de commutation.
